# EUROPÄISCHE PATENTSCHRIFT

(11) **EP 4 185 930 B1**
(45) Veröffentlichungstag und Bekanntmachung des Hinweises auf die Patenterteilung: **19.11.2025**
(21) Anmeldenummer: 21743456.2
(22) Anmeldetag: 12.07.2021
(51) Int. Cl.: G05B 19/418

(54) **AUTOMATISIERUNGSSYSTEM UND VERFAHREN ZUR STEUERUNG EINES PRODUKTIONSPROZESSES IN EINER PRODUKTIONSANLAGE DER METALLERZEUGENDEN INDUSTRIE, DER NICHT-EISEN-INDUSTRIE ODER DER STAHLINDUSTRIE ZUR HERSTELLUNG VON HALBZEUGEN ODER FERTIGERZEUGNISSEN**
AUTOMATION SYSTEM AND METHOD FOR CONTROLLING A PRODUCTION PROCESS IN A PRODUCTION PLANT OF THE METAL PRODUCING INDUSTRY, THE NON-FERROUS INDUSTRY OR THE STEEL INDUSTRY FOR THE PRODUCTION OF SEMI-FINISHED OR FINISHED PRODUCTS
SYSTÈME D'AUTOMATISATION ET PROCÉDE DE COMMANDE D'UN PROCESSUS DE PRODUCTION DANS UNE INSTALLATION DE PRODUCTION DE L'INDUSTRIE MÉTALLIQUE, DE L'INDUSTRIE DES NON-FERREUX OU DE L'INDUSTRIE SIDÉRURGIQUE POUR LA PRODUCTION DE PRODUITS SEMI-FINIS OU FINIS

(30) Priorität: 21.07.2020 DE 102020209143
(43) Veröffentlichungstag der Anmeldung: 31.05.2023
(73) Patentinhaber: SMS group GmbH, 41069 Mönchengladbach (DE)
(72) Erfinder: GEERKENS, Christian, 41363 Jüchen (DE); MAYR, Gerald, 83646 Bad Tölz (DE)
(74) Vertreter: Kross, Ulrich
(86) Internationale Anmeldenummer: PCT/EP2021/069304
(87) Internationale Veröffentlichungsnummer: WO 2022/017849

(56) Entgegenhaltungen:
- EP-A1- 3 576 349
- US-A1- 2010 271 989

## Beschreibung

Die Erfindung betrifft ein Automatisierungssystem zur Steuerung eines Produktionsprozesses in einer Produktionsanlage der metallerzeugenden Industrie, der Nicht-Eisen-Industrie oder der Stahlindustrie zur Herstellung von Halbzeugen oder Fertigerzeugnissen. Die Erfindung betrifft ferner ein Verfahren zur Steuerung eines Produktionsprozesses in einer Produktionsanlage der metallerzeugenden Industrie, der Nicht-Eisen-Industrie oder der Stahlindustrie zur Herstellung von Halbzeugen oder Fertigerzeugnissen.

Die Erfindung betrifft generell eine Anlage der Hüttenindustrie wie beispielsweise eine Anlage der metallerzeugenden Industrie, der Nicht-Eisen- (NE) oder Stahlindustrie oder der Vorlegierungsherstellung. Beispiele für derartige industrielle Anlagen sind Hochöfen, Direktreduktionsanlagen, Lichtbogenöfen, Konverter oder Anlagen für Pfannenprozesse, Anlagen zum Ur- oder Umformen von Metallen wie beispielsweise Strang- oder Knüppelgießanlagen und Warm- und/oder Kaltwalzanlagen, oder diesen Anlagen vor- oder nachgelagerten Anlagen wie beispielsweise Öfen, z. B. Wiedererwärmungs- oder Halteöfen, Adjustageeinrichtungen, Beschichtungslinien, Kühlstrecken, Beizen oder Glühen.

Bei den aus dem Stand der Technik bekannten Automatisierungssystemen zur Steuerung eines Produktionsprozesses in einer Produktionsanlage der metallerzeugenden Industrie, der Nicht-Eisen-Industrie oder der Stahlindustrie zur Herstellung von Halbzeugen oder Fertigerzeugnissen werden die Aktoren und/oder Sensoren in den einzelnen Anlagenteilen über eine Verkabelung mit sogenannten Remote Input-Outputs (RIOs) verbunden. Dabei werden die RIOs über eine Busverkabelung mit Schaltschränken verbunden. Die steuerungstechnischen und regelungstechnischen Funktionen werden durch sogenannte Programmable Logic Controller (PLC) oder vergleichbare Hardware übernommen, welche in den Schaltschränken angeordnet sind. Die Sollwertrückgabe von der PLC oder vergleichbaren Hardware zurück an die Aktoren und/oder Sensoren erfolgt ebenfalls über die Busverkabelung. Neben PLCs kommen auch Leitsysteme von Drittanbietern zum Einsatz, wie beispielsweise PCS7 von der Firma Siemens oder Melody von der Firma ABB. Ferner werden für hochdynamische Anwendungen sogenannte Motion Controller unterschiedlicher Hersteller verwendet, welche als echtzeitfähige Systeme schnelle Regelungen bis 1 ms ermöglichen. Diese Systeme sind mit der PLC und/oder Leitsystemebene verbunden und erhalten von dort ihre Sollwertvorgaben.

Die aus dem Stand der Technik bekannten Automatisierungssysteme weisen einen hohen Montage- und Verkabelungsaufwand auf. Je nach Funktion (Steuerung/Regelung/Sicherheit) sind Spezialkabel erforderlich, hinzu kommen die Busverbindung und im Fall von sicherheitstechnischen Erfordernissen eventuell eine diskrete Verkabelung bis in den Schaltschrank. Ferner weisen die aus dem Stand der Technik bekannten Automatisierungssysteme einen hohen Aufwand entlang der gesamten Engineering Kette auf, beispielsweise beim Hardware-Engineering wie der Erstellung eines E-Plans. Neben der aufwändigen Planung sind die aus dem Stand der Technik bekannten Automatisierungssysteme nur mit einem hohen Aufwand auf ordnungsgemäße Funktionalität vor Ort zu prüfen. Ferner muss eine Kalibrierung erfolgen und es müssen Automatisierungsregeln in den PLC- und Leitsystemen erstellt werden, die zentral verwaltet werden. EP-A1-3576349 und US-A 1-2010/271989 beziehen sich auf Systeme zur Prozesssteuerung in Industrieanlagen mit Mesh-Netzwerken.

Es ist Aufgabe der vorliegenden Erfindung die Planung, Installation und Inbetriebnahme, sowie den laufenden Betrieb von Automatisierungssystemen zur Steuerung eines Produktionsprozesses in einer Produktionsanlage der metallerzeugenden Industrie, der Nicht-Eisen-Industrie oder der Stahlindustrie zur Herstellung von Halbzeugen oder Fertigerzeugnissen zu vereinfachen.

Die Aufgabe wird erfindungsgemäß gelöst durch ein Automatisierungssystem zur Steuerung eines Produktionsprozesses in einer Produktionsanlage der metallerzeugenden Industrie, der Nicht-Eisen-Industrie oder der Stahlindustrie zur Herstellung von Halbzeugen oder Fertigerzeugnissen gemäß des Gegenstands des Anspruchs 1.

Zur Steuerung der Aktoren und/oder Sensoren des Anlagenteils sind in der zugehörigen Steuereinheit zweckmäßigerweise entsprechende Informationen zu dem zu steuernden Anlagenteil gespeichert. Die Steuerung basiert insbesondere auf den Daten der Aktoren und/oder Sensoren und dem auszuführenden Produktionsschritt. Ferner können diesbezüglich mathematische Modelle, Expertenwissen oder dergleichen berücksichtigt werden.

Die einzelnen Anlagenteile weisen erfindungsgemäß jeweils eine separate Steuereinheit auf, welche die Steuerung der Aktoren und/oder Sensoren in dem jeweiligen Anlagenteil übernimmt. Die Automatisierung des Produktionsprozesses in der Produktionsanlage wird somit durch dezentral angeordnete intelligente Steuereinheiten ausgeführt. Eine intelligente Steuereinheit implementiert lokal, also in dem Anlagenteil, möglichst viele Funktionen der Steuerung der Aktoren und/oder Sensoren in dem jeweiligen Anlagenteil. Die Anlagenfunktionen, egal welcher Natur oder Ursprungs, werden soweit möglich lokal in dem Anlagenteil durch die Steuereinheit in dem Anlagenteil ausgeführt. Zweckmäßigerweise sind die Steuereinheiten auch in dem jeweiligen Anlagenteil angeordnet, so dass die Steuereinheiten dezentral über die Produktionsanlage verteilt angeordnet sind.

Da die Ausführung eines Produktionsschrittes in einem Anlagenteil von einem anderen Produktionsschritt in einem anderen Anlagenteil abhängig sein kann, insbesondere von der Automatisierung des Produktionsschrittes in dem anderen Anlagenteil, umfassen die Steuereinheiten des Automatisierungssystems drahtlose Kommunikationsmittel zur drahtlosen Kommunikation miteinander. Die separaten Steuereinheiten können also über die drahtlosen Kommunikationsmittel Informationen untereinander austauschen, sofern dies notwendig und/oder sinnvoll ist.

Durch die Verwendung von drahtlosen Kommunikationsmitteln wird der Verkabelungsaufwand minimiert, wodurch sich auch die Planung und Inbetriebnahme der Produktionsanlage deutlich vereinfacht. Die drahtlosen Kommunikationsmittel sind hinsichtlich der Übertragungstechnik nicht eingeschränkt und basieren beispielsweise auf Bluetooth, Low-Energy Bluetooth, Near Field Communication (NFC), Mobilfunkstandards wie 4G oder 5G, Wireless Local Area Network (WLAN), oder anderen bekannten oder zukünftigen drahtlosen Übertragungstechniken.

In einer erfindungsgemäßen Variante umfasst das Automatisierungssystem ein zentrales Leitsystem, wobei die separaten Steuereinheiten mittels der drahtlosen Kommunikationsmittel mit dem zentralen Leitsystem kommunizieren. In einigen Produktionsanlagen ist es eventuell notwendig, dass einige Aspekte des Produktionsprozesses in der Produktionsanlage von einem zentralen Leitsystem gesteuert werden. In diesem Fall kommuniziert das zentrale Leitsystem über die drahtlosen Kommunikationsmittel mit den separaten Steuereinheiten in den Anlagenteilen. Die Einbindung eines zentralen Leitsystems erfolgt jedoch nur, wenn dessen Funktion nicht lokal von den separaten Steuereinheiten ausgeführt werden kann.

Gemäß einer bevorzugten Variante der Erfindung umfassen die separaten Steuereinheiten jeweils eine Recheneinrichtung. Die Recheneinrichtung ist beispielsweise ein Mikrocontroller, ein Programmable Logic Controller (PLC), oder dergleichen. Mittels der Recheneinrichtung lassen sich eine Vielzahl von Steuerungsfunktionen für die Aktoren und/oder Sensoren des entsprechenden Anlagenteils ausführen.

Nach einer zweckmäßigen Variante umfassen die separaten Steuereinheiten ein Netzkabel und/oder einen Akkumulator als Spannungsversorgung.

In einer vorteilhaften Variante der Erfindung umfassen die separaten Steuereinheiten zumindest teilweise ein Schutzgehäuse. Durch das Schutzgehäuse sind die Steuereinheiten besser vor äußeren Einflüssen geschützt. Dies ist insbesondere bei einem Einsatz in einer Produktionsanlage der metallerzeugenden Industrie, der Nicht-Eisen-Industrie oder der Stahlindustrie sinnvoll, da in derartigen Anlagen die äußeren Einflüsse eine ungeschützte Steuereinheit beschädigen könnten. Die Steuereinheiten sind als hüttengerechte Komponenten ausgebildet. Unter Umständen sind die Steuereinheiten durch die Schutzgehäuse Ex geschützt, wenn dies erforderlich ist.

Gemäß der Erfindung sind in den separaten Steuereinheiten zumindest teilweise Informationen zu benachbarten Anlagenteilen und/oder Informationen zu der gesamten Produktionsanlage und deren Anlagenteile gespeichert. Die separaten Steuereinheiten haben somit zumindest teilweise Kenntnis von dem Aufbau der gesamten Produktionsanlage und verfügen dadurch beispielsweise auch über Informationen, wie der vorherige und/oder nachfolgende Produktionsschritt ausgebildet ist.

Erfindungsgemäß ist das Automatisierungssystem selbstkonfigurierend, insbesondere selbstvernetzend, ausgebildet. Dadurch, dass die separaten Steuereinheiten zumindest teilweise Informationen zu benachbarten Anlagenteilen und/oder Informationen zu der gesamten Produktionsanlage und deren Anlagenteile umfassen, kann das Automatisierungssystem selbstkonfigurierend, insbesondere selbstvernetzend, ausgebildet sein. Die Einrichtung und Inbetriebnahme werden dadurch erheblich vereinfacht.

Die Aufgabe wird ferner gelöst durch ein Verfahren zur Steuerung eines Produktionsprozesses in einer Produktionsanlage der metallerzeugenden Industrie, der Nicht-Eisen-Industrie oder der Stahlindustrie zur Herstellung von Halbzeugen oder Fertigerzeugnissen gemäß des Gegenstands des Anspruchs 6.

Dabei speichern die separaten Steuereinheiten vorzugsweise zumindest teilweise Informationen zu dem zu steuernden Anlagenteil. Die Steuerung basiert insbesondere auf den Daten der Aktoren und/oder Sensoren und dem auszuführenden Produktionsschritt. Ferner können diesbezüglich mathematische Modelle, Expertenwissen oder dergleichen berücksichtigt werden.

Die einzelnen Anlagenteile, insbesondere deren Aktoren und/oder Sensoren, werden erfindungsgemäß jeweils durch eine separate Steuereinheit gesteuert. Die Automatisierung des Produktionsprozesses in der Produktionsanlage erfolgt somit dezentral. Insbesondere wird die Steuerung der Aktoren und/oder Sensoren lokal von intelligenten Steuereinheiten in dem jeweiligen Anlagenteil übernommen. Eine intelligente Steuereinheit implementiert lokal, also in dem Anlagenteil, möglichst viele Funktionen der Steuerung der Aktoren und/oder Sensoren des jeweiligen Anlagenteils. Die Anlagenfunktionen, egal welcher Natur oder Ursprungs, werden soweit möglich lokal in dem Anlagenteil durch die Steuereinheit in dem Anlagenteil ausgeführt. Zweckmäßigerweise sind die Steuereinheiten auch in dem jeweiligen Anlagenteil angeordnet, so dass die Steuereinheiten dezentral über die Produktionsanlage verteilt angeordnet sind.

Da die Ausführung eines Produktionsschrittes in einem Anlagenteil von einem anderen Produktionsschritt in einem anderen Anlagenteil abhängig sein kann, insbesondere von der Automatisierung des Produktionsschrittes in dem anderen Anlagenteil, umfasst das erfindungsgemäße Verfahren den Schritt des Austauschens von Daten zwischen den separaten Steuereinheiten des Automatisierungssystems über drahtlose Kommunikationsmittel. Die separaten Steuereinheiten tauschen somit Informationen drahtlos untereinander aus, sofern dies notwendig und/oder sinnvoll ist.

Durch den Austausch der Informationen über drahtlosen Kommunikationsmitteln wird der Verkabelungsaufwand minimiert, wodurch sich auch die Planung und Inbetriebnahme der Produktionsanlage deutlich vereinfacht. Die drahtlosen Kommunikationsmittel sind hinsichtlich der Übertragungstechnik nicht eingeschränkt und basieren beispielsweise auf Bluetooth, Low-Energy Bluetooth, Near Field Communication (NFC), Mobilfunkstandards wie 4G oder 5G, Wireless Local Area Network (WLAN), oder anderen bekannten oder zukünftigen drahtlosen Übertragungstechniken.

Nach einer Variante der Erfindung umfasst das erfindungsgemäße Verfahren ferner den Schritt des Austauschens von Daten zwischen den separaten Steuereinheiten und einem zentralen Leitsystem. Der Datenaustausch zwischen dem zentralen Leitsystem und den separaten Steuereinheiten erfolgt vorzugsweise ebenfalls drahtlos, insbesondere über die ohnehin vorhandenen drahtlosen Kommunikationsmittel zur Kommunikation zwischen den separaten Steuereinheiten. Die Einbindung eines zentralen Leitsystems erfolgt jedoch nur, wenn dessen Funktion nicht lokal von den separaten Steuereinheiten ausgeführt werden kann.

Gemäß einer vorteilhaften Variante der Erfindung werden die zur Steuerung relevanten Daten lokal in den separaten Steuereinheiten verarbeitet. Dazu weisen die separaten Steuereinheiten insbesondere eine Recheneinrichtung auf, wie beispielsweise einen Mikrocontroller, einen Programmable Logic Controller (PLC), oder dergleichen. Die Steuerung des Produktionsschritt in dem Anlagenteil wird somit vorzugsweise von der separaten zugehörigen Steuereinheit lokal ausgeführt.

Erfindungsgemäß speichern die separaten Steuereinheiten zumindest teilweise Informationen zu benachbarten Anlagenteilen und/oder Informationen zu der gesamten Produktionsanlage und deren Anlagenteile. Die separaten Steuereinheiten haben somit zumindest teilweise Kenntnis von dem Aufbau der gesamten Produktionsanlage und verfügen dadurch beispielsweise auch über Informationen, wie der vorherige und/oder nachfolgende Produktionsschritt ausgebildet ist.

Nach einer besonders vorteilhaften erfindungsgemäßen Variante konfigurieren und/oder vernetzen sich die separaten Steuereinheiten selbstständig. Dies ist möglich, wenn die separaten Steuereinheiten zumindest teilweise Informationen zu benachbarten Anlagenteilen und/oder Informationen zu der gesamten Produktionsanlage und deren Anlagenteile umfassen. Mittels der drahtlosen Kommunikationsmittel können sich die separaten Steuereinheiten auf Basis dieser Informationen selbstständig untereinander vernetzen.

Nachfolgend wird die Erfindung anhand eines in der Figur dargestellten Ausführungsbeispiels näher erläutert. Es zeigt:

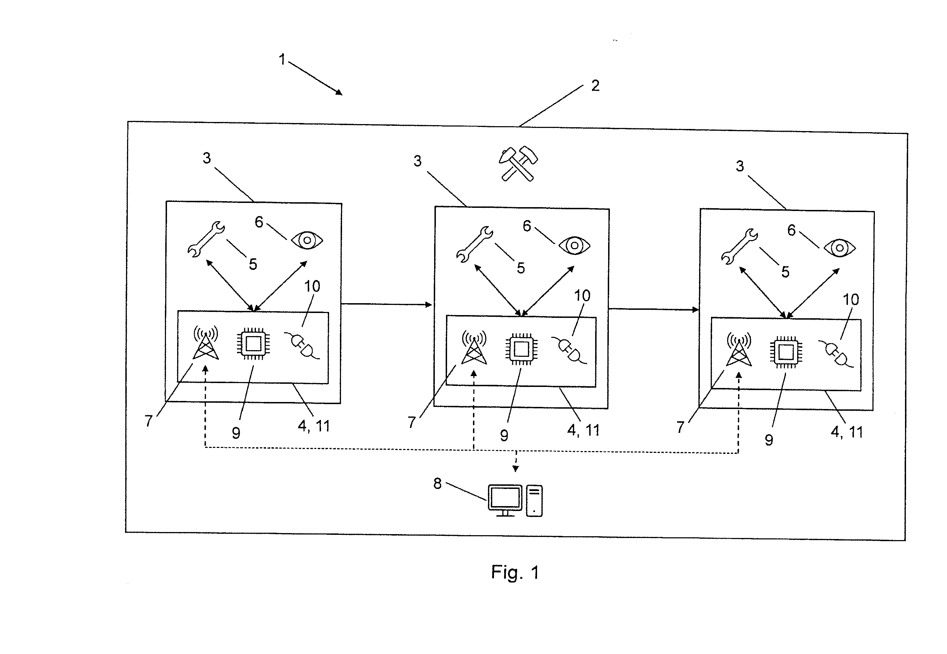

- Fig. 1: eine schematische Ansicht eines Ausführungsbeispiels eines erfindungsgemäßen Automatisierungssystems.

Fig. 1 zeigt eine schematische Ansicht eines Ausführungsbeispiels eines erfindungsgemäßen Automatisierungssystem 1 zur Steuerung eines Produktionsprozesses in einer Produktionsanlage 2 der metallerzeugenden Industrie, der Nicht-Eisen-Industrie oder der Stahlindustrie zur Herstellung von Halbzeugen oder Fertigerzeugnissen. Die Produktionsanlage 2 umfasst generell mehrere Anlagenteile 3 zur Ausführung von separaten Produktionsschritten. Gemäß dem in Fig. 1 dargestellten Ausführungsbeispiel umfasst die Produktionsanlage 2 insgesamt drei Anlagenteile 3, welche sequenziell aufeinanderfolgende separate Produktionsschritte ausführen. Die sequenzielle Abfolge ist durch die Pfeile zwischen den Anlagenteilen 3 dargestellt.

Das erfindungsgemäße Automatisierungssystem 1 umfasst für jeden Anlagenteil 3 eine separate Steuereinheit 4. Die Steuereinheit 4 ist zur Steuerung von Aktoren 5 und/oder Sensoren 6 des jeweiligen Anlagenteils 3 ausgebildet, zwecks Automatisierung des Produktionsschrittes in dem jeweiligen Anlagenteil 3.

Die separaten Steuereinheiten 4 des Automatisierungssystems 1 umfassen jeweils drahtlose Kommunikationsmittel 7, zur drahtlosen Kommunikation miteinander. Die drahtlose Kommunikation ist in Fig. 1 durch die gestrichelte Linie symbolisiert.

Gemäß dem in Fig. 1 dargestellten Ausführungsbeispiel umfasst das Automatisierungssystem 1 bzw. die Produktionsanlage 2 ein zentrales Leitsystem 8. Die separaten Steuereinheiten 4 können mittels der drahtlosen Kommunikationsmittel 7 mit dem zentralen Leitsystem 8 kommunizieren, wie ebenfalls durch die gestrichelte Linie symbolisiert.

Ferner umfassen die separaten Steuereinheiten 4 gemäß dem Ausführungsbeispiel aus Fig. 1 jeweils eine Recheneinrichtung 9. Die Recheneinrichtung 9 ist beispielsweise ein Mikrocontroller, Programmable Logic Controller (PLC) oder dergleichen.

Die separaten Steuereinheiten 4 umfassen ein Netzkabel 10 zur Spannungsversorgung. Alternativ oder zusätzlich können die separaten Steuereinheiten 4 einen Akkumulator zur Spannungsversorgung bzw. als Notfallspannungsversorgung umfassen.

Die separaten Steuereinheiten 4 umfassen ferner Schutzgehäuse 11, um die Komponenten der separaten Steuereinheiten 4 vor äußeren Einflüssen zu schützen. Dadurch sind die separaten Steuereinheiten 4 hüttengerecht ausgebildet und eignen sich für Produktionsanlagen 2 der metallerzeugenden Industrie, der Nicht-Eisen-Industrie oder der Stahlindustrie.

In den separaten Steuereinheiten 4 sind zumindest teilweise Informationen zu benachbarten Anlagenteilen 3 und/oder Informationen zu der gesamten Produktionsanlage 2 und deren Anlagenteile 3 gespeichert. Diese Informationen ermöglichen beispielsweise, dass das Automatisierungssystem 1 selbstkonfigurierend, insbesondere selbstvernetzend, ausgebildet ist.

Erfindungsgemäß wird der Produktionsprozesses in einer Produktionsanlage 2 der metallerzeugenden Industrie, der Nicht-Eisen-Industrie oder der Stahlindustrie zur Herstellung von Halbzeugen oder Fertigerzeugnissen dadurch gesteuert, dass die separaten Steuereinheiten 4 die jeweiligen Automatisierungen der Produktionsschritte in den Anlagenteilen 3 lokal steuern. Die separaten Steuereinheiten 4 steuern insbesondere die jeweiligen Aktoren 5 und/oder Sensoren 6 in den Anlagenteilen 3. Zwischen den separaten Steuereinheiten 4 können Daten über die drahtlosen Kommunikationsmittel 7 ausgetauscht werden.

Über die drahtlosen Kommunikationsmittel 7 können die separaten Steuereinheiten 3 gemäß dem Ausführungsbeispiel aus Fig. 1 ebenfalls Daten mit dem zentralen Leitsystem 8 austauschen.

Die zur Steuerung relevanten Daten werden dabei vorzugsweise und soweit wie möglich in den jeweiligen separaten Steuereinheiten 4 lokal ausgeführt. Dies erfolgt beispielsweise durch die jeweilige Recheneinrichtung 9.

Zur Steuerung des Produktionsschrittes in dem jeweiligen Anlagenteil 3 sind in den separaten Steuereinheiten 4 entsprechende Informationen über den zugehörigen Anlagenteil 3 gespeichert. Insbesondere sind in den separaten Steuereinheiten 4 zumindest teilweise Informationen zu benachbarten Anlagenteilen 3 und/oder Informationen zu der gesamten Produktionsanlage 2 und deren Anlagenteile 3 gespeichert. Mit diesen gespeicherten Informationen kann sich das erfindungsgemäße Automatisierungssystem 1 selbst konfigurieren und insbesondere vernetzen sich die separaten Steuereinheiten 4 selbstständig untereinander.

### Bezugszeichenliste

- 1: Automatisierungssystem
- 2: Produktionsanlage
- 3: Anlagenteil
- 4: Steuereinheit
- 5: Aktor
- 6: Sensor
- 7: drahtlose Kommunikationsmittel
- 8: zentrales Leitsystem
- 9: Recheneinrichtung
- 10: Netzkabel/Akkumulator
- 11: Gehäuse

## Patentansprüche

1. Automatisierungssystem (1) zur Steuerung eines Produktionsprozesses in einer Produktionsanlage (2) der metallerzeugenden Industrie, der Nicht-Eisen-Industrie oder der Stahlindustrie zur Herstellung von Halbzeugen oder Fertigerzeugnissen,
wobei die Produktionsanlage (2) mehrere Anlagenteile (3) zur Ausführung von separaten Produktionsschritten umfasst,
wobei das Automatisierungssystem (1) für jeden Anlagenteil (3) eine separate Steuereinheit (4) umfasst, zur Steuerung von Aktoren (5) und/oder Sensoren (6) des jeweiligen Anlagenteils (3) zwecks Automatisierung des Produktionsschrittes in dem jeweiligen Anlagenteil (3),
**dadurch gekennzeichnet, dass**
die separaten Steuereinheiten (4) des Automatisierungssystems (1) drahtlose Kommunikationsmittel (7) umfassen, zur drahtlosen Kommunikation miteinander, und in den separaten Steuereinheiten (4) Informationen über den zugehörigen Anlagenteil (3) und des Weiteren zumindest teilweise Informationen zu benachbarten Anlagenteilen (3) und/oder Informationen zu der gesamten Produktionsanlage (2) und deren Anlagenteile (3) gespeichert sind, wobei diese gespeicherten Informationen es ermöglichen, dass das Automatisierungssystem (1) selbstkonfigurierend und selbstvernetzend ausgebildet ist.

2. Automatisierungssystem (1) nach Anspruch 1,
ferner umfassend ein zentrales Leitsystem (8), wobei die separaten Steuereinheiten (4) mittels der drahtlosen Kommunikationsmittel (7) mit dem zentralen Leitsystem (8) kommunizieren.

3. Automatisierungssystem (1) nach Anspruch 1 oder Anspruch 2,
wobei die separaten Steuereinheiten (4) jeweils eine Recheneinrichtung (9) umfassen.

4. Automatisierungssystem (1) nach einem der Ansprüche 1 bis 3,
wobei die separaten Steuereinheiten (4) ein Netzkabel (10) und/oder einen Ackumulator als Spannungsversorgung umfassen.

5. Automatisierungssystem (1) nach einem der Ansprüche 1 bis 4,
wobei die separaten Steuereinheiten (4) zumindest teilweise ein Schutzgehäuse (11) umfassen.

6. Verfahren zur Steuerung eines Produktionsprozesses in einer Produktionsanlage (2) der metallerzeugenden Industrie, der Nicht-Eisen-Industrie oder der Stahlindustrie zur Herstellung von Halbzeugen oder Fertigerzeugnissen,
wobei die Produktionsanlage (2) mehrere Anlagenteile (3) zur Ausführung von separaten Produktionsschritten umfasst,
umfassend die Schritte:
Steuern der Automatisierung des Produktionsschrittes in den Anlagenteilen (3) durch separate Steuereinheiten (4), durch Steuern von Aktoren (5) und/oder Sensoren (6) des jeweiligen Anlagenteils (3), und
Austauschen von Daten zwischen den separaten Steuereinheiten (4) über drahtlose Kommunikationsmittel (7),
wobei die separaten Steuereinheiten (4) Informationen über den zugehörigen Anlagenteil (3) und des Weiteren zumindest teilweise Informationen zu benachbarten Anlagenteilen (3) und/oder Informationen zu der gesamten Produktionsanlage (2) und deren Anlagenteile (3) speichern, wobei diese gespeicherten Informationen es ermöglichen, dass sich die separaten Steuereinheiten (4) selbst konfigurieren und selbstständig untereinander vernetzen.

7. Verfahren nach Anspruch 6,
ferner umfassend den Schritt des Austauschens von Daten zwischen den separaten Steuereinheiten (4) und einem zentralen Leitsystem (8).

8. Verfahren nach Anspruch 6 oder Anspruch 7,
wobei die zur Steuerung relevanten Daten lokal in den separaten Steuereinheiten (4) verarbeitet werden.

## Claims

1. Automation system (1) for controlling a production process in a production plant (2) of the metal-producing industry, the non-ferrous industry or the steel industry for production of semi-finished products or finished products,
wherein the production plant (2) comprises a plurality of plant parts (3) for execution of separate production steps,
wherein the automation system (1) comprises for each plant part (3) a separate control unit (4) for controlling actuators (5) and/or sensors (6) of the respective plant part (3) for the purpose of automation of the production step in the respective plant part (3),
**characterised in that**
the separate control units (4) of the automation system (1) comprise wire-free communication means (7) for wire-free communication with one another, and data about the associated plant part (3) and in addition at least partial data with respect to adjacent plant parts (3) and/or data with respect to the entire production plant (2) and the plant parts (3) thereof are stored in the separate control units (4), wherein these stored data make it possible for the automation system (1) to be formed to be self-configuring and self-networking.

2. Automation system (1) according to claim 1, further comprising a central control system (8), wherein the separate control units (4) communicate with the central control system (8) by way of wire-free communication means (7).

3. Automation system (1) according to claim 1 or claim 2, wherein the separate control units (4) each comprise a computer device (9).

4. Automation system (1) according to any one of claims 1 to 3, wherein the separate control units (4) comprise a mains cable (10) and/or a battery as voltage supply.

5. Automation system (1) according to any one of claims 1 to 4, wherein the separate control units (4) comprise at least in part a protective housing (11).

6. Method of controlling a production process in a production plant (2) of the metal-producing industry, the non-ferrous industry or the steel industry for production of semi-finished products or finished products,
wherein the production plant (2) comprises a plurality of plant parts (3) for execution of separation production steps,
comprising the steps:
controlling the automation of the production step in the plant parts (3) by separate control units (4), by controlling actuators (5) and/or sensors (6) of the respective plant part (3), and exchanging data between the separate control units (4) by way of wire-free communication means (7),
wherein the separate control units (4) store data about the associated plant parts (3) and in addition at least partial data with respect to adjacent plant parts (3) and/or data with respect to the entire production plant (2) and the plant parts (3) thereof,
wherein these stored data make it possible for the separate control units (4) to self-configure and independently network with one another.

7. Method according to claim 6, further comprising the step of exchange of data between the separate control units (4) and a central control system (8).

8. Method according to claim 6 or claim 7, wherein the data relevant for control are locally processed in the separate control units (4).

## Revendications

1. Système d'automatisation (1) pour la commande d'un processus de production dans une installation de production (2) de l'industrie métallurgique, de l'industrie des métaux non ferreux ou de l'industrie sidérurgique pour la fabrication de produits semi-finis ou de produits finis,
l'installation de production (2) comprenant plusieurs parties d'installation (3) pour l'exécution d'étapes de production séparées,
le système d'automatisation (1) comprenant pour chaque partie d'installation (3) une unité de commande séparée (4), pour la commande d'actionneurs (5) et/ou de capteurs (6) de la partie d'installation (3) respective en vue de l'automatisation de l'étape de production dans la partie d'installation (3) respective,
**caractérisé en ce que**
les unités de commande séparées (4) du système d'automatisation (1) comprennent des moyens de communication sans fil (7), pour une communication sans fil entre elles, et les unités de commande séparées (4) stockant des informations sur la partie d'installation (3) associée et, en outre, au moins partiellement des informations concernant des parties d'installation (3) voisines et/ou des informations concernant l'ensemble de l'installation de production (2) et ses parties d'installation (3),
ces informations stockées permettant que le système d'automatisation (1) soit conçu de manière à s'auto-configurer et à s'auto-interconnecter.

2. Système d'automatisation (1) selon la revendication 1,
comprenant en outre un système de conduite central (8), les unités de commande séparées (4) communiquant avec le système de conduite central (8) au moyen des moyens de communication sans fil (7).

3. Système d'automatisation (1) selon la revendication 1 ou la revendication 2,
les unités de commande séparées (4) comprenant chacune une unité de calcul (9).

4. Système d'automatisation (1) selon l'une des revendications 1 à 3,
les unités de commande séparées (4) comprenant un câble d'alimentation (10) et/ou un accumulateur en tant qu'alimentation en tension.

5. Système d'automatisation (1) selon l'une des revendications 1 à 4,
les unités de commande séparées (4) comprenant au moins partiellement un boîtier de protection (11).

6. Procédé de commande d'un processus de production dans une installation de production (2) de l'industrie métallurgique, de l'industrie des métaux non ferreux ou de l'industrie sidérurgique pour la fabrication de produits semi-finis ou de produits finis,
l'installation de production (2) comprenant plusieurs parties d'installation (3) pour l'exécution d'étapes de production séparées,
comprenant les étapes consistant à :
commander l'automatisation de l'étape de production dans les parties d'installation (3) par des unités de commande séparées (4), en commandant des actionneurs (5) et/ou des capteurs (6) de la partie d'installation (3) respective, et
échanger des données entre les unités de commande séparées (4) par l'intermédiaire de moyens de communication sans fil (7),
les unités de commande séparées (4) stockant des informations sur la partie d'installation (3) associée et, en outre, au moins partiellement des informations concernant des parties d'installation (3) voisines et/ou des informations concernant l'ensemble de l'installation de production (2) et ses parties d'installation (3),
ces informations stockées permettant que les unités de commande séparées (4) se configurent elles-mêmes et s'interconnectent de manière autonome.

7. Procédé selon la revendication 6,
comprenant en outre l'étape consistant à échanger des données entre les unités de commande séparées (4) et un système de conduite central (8).

8. Procédé selon la revendication 6 ou la revendication 7,
les données pertinentes pour la commande étant traitées localement dans les unités de commande séparées (4).
